# EUROPEAN PATENT APPLICATION

(11) **EP 1 168 211 A1**
(43) Date of publication of application: **02.01.2002**
(21) Application number: 01101102.0
(22) Date of filing: 18.01.2001
(51) Int. Cl.: G06F 17/60

(54) **Content data processing system and content data processing method**

(30) Priority: 30.06.2000 JP 2000198661
(71) Applicant: TSUBASA SYSTEM CO. LTD., Tokyo (JP)
(72) Inventor: Mizutani, Teiji, c/o Tsubasa System Co., Ltd., Koutou-ku, Tokyo (JP)
(74) Representative: Modiano, Guido, Dr.-Ing.

(57) **Abstract**

A content data processing system 2 includes a notice control module 51 for controlling a notice of prize information, a registration control module 53 for registering, as applicant information, attributes of applicants who applied for the prize information, a content data creating module 54 for creating content data in accordance with the attributes of the applicants in the applicant information, and a transmitting module 55 for transmitting the content data to the corresponding applicant. In this architecture, the content data corresponding to a favorite of the individual applicant are transmitted (sent back), whereby online marketing for increasing an effect of creating a commercial chance can be attained.

## Description

### BACKGROUND OF THE INVENTION

The present invention relates generally to an online information providing system, and more particularly to a content data processing system and a content data processing method that are capable of attaining online marketing for increasing an effect of creating a commercial chance.

Over the recent years, it has been carried out online marketing on the Internet, in which a notice of a prize advertisement is given, E-mails of results of lot are delivered to applicants, and campaign information is multicast to the applicants on the basis of a list of application names. It can be expected that the prize advertisement utilizing the Internet highly attracts attentions of potential customers, however, the contents delivered to the applicants are uniformly the same and multicast by mail one-sidedly. Therefore, it is insufficient that pieces of information on favorites peculiar to the applicants are utilized so as to reflect in the marketing.

### SUMMARY OF THE INVENTION

Accordingly, it is a primary object of the present invention to provide a content data processing system and a content data processing method that are capable of transmitting (sending back) content data corresponding to favorites of individual applicants.

To accomplish the above object, a first content data processing system according to the present invention comprises a notice control module for controlling a notice of prize information, a registration control module for registering, as applicant information, attributes of applicants who applied for the prize information, a content data creating module for creating content data in accordance with the attributes of the applicants in the applicant information, and a transmitting module for transmitting the content data to the corresponding applicant.

A second content data processing system according to the present invention may further comprise an application accept module for receiving the applicant information on the attributes of the applicants, and accepting the applications for the prize information.

A third content data processing system according to the present invention may further comprise an applicant information storage module for storing the applicant information.

A fourth content data processing system according to the present invention may further comprise an article information acquiring module for acquiring article information on the commercial article in the predetermined category. The content data creating module creates the content data on the basis of the article information acquired.

A fifth content data processing system according to the present invention may further comprise a content data creating module for creating other set of content data corresponding to the applicant information. The content data contain a piece of information for accessing other set of content data.

A first content data processing method comprises a step of controlling a notice of prize information, a step of registering, as applicant information, attributes of applicants who applied for the prize information, a step of creating content data in accordance with the attributes of the applicants in the applicant information, and a step of transmitting the content data to the corresponding applicant.

A second content data processing method according to the present invention may further comprise a step of receiving the applicant information on the attributes of the applicants, and accepting the applications for the prize information.

A third content data processing method according to the present invention may further comprise a step of acquiring article information on the commercial article in the predetermined category, and a step of creating the content data on the basis of the article information acquired.

A fourth content data processing method according to the present invention may further comprise a step of creating other set of content data corresponding to the applicant information. The content data contain a piece of information for accessing other set of content data.

According to the present invention, the content data corresponding to a favorite of the individual applicant are transmitted (sent back), whereby online marketing for increasing an effect of creating a commercial chance can be attained.

### BRIEF DESCRIPTION OF THE DRAWINGS

These objects and advantages of the present invention will become more apparent and more readily appreciated from the following detailed description of the presently preferred exemplary embodiments, taken in conjunction with the accompanying drawings of which:
FIG. 1 is a block diagram showing an architecture of an online information providing system in one embodiment of the present invention;
FIG. 2 is a diagram showing one example of a prize page;
FIG. 3 is a diagram showing one example of an application page;
FIG. 4 is a diagram showing one example of acquired information (related to cars);
FIG. 5 is a diagram showing one example of an E-mail document;
FIG. 6 is a diagram showing one example of the E-mail document;
FIG. 7 is a diagram showing one example of the E-mail document;
FIG. 8 is a diagram showing one example of an HTML document page;
FIG. 9 is a diagram showing one example of a data field in a choice car list;
FIG. 10 is a diagram showing one example of choice used car information;
FIG. 11 is a diagram showing one example of safety check estimation information; and
FIG. 12 is a diagram showing one example of a link-shop guide.

### DETAILED DESCRIPTION OF THE PREFERRED EMBODIMENTS

An embodiment of the present invention will hereinafter be discussed with reference to the accompanying drawings.

### [Architecture of Online Information Providing System]

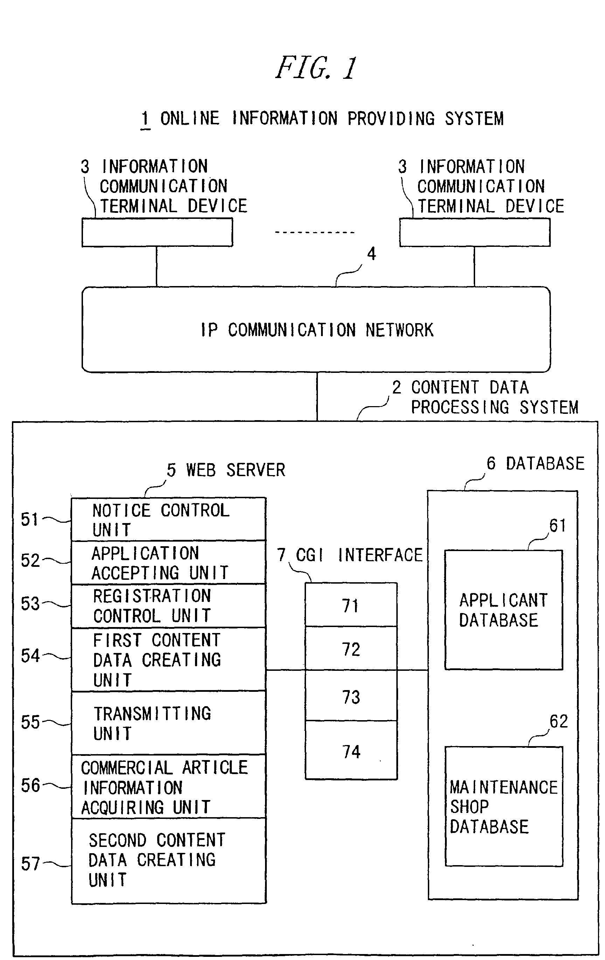

Referring first to FIG. 1, an online information providing system 1 in one embodiment includes a content data processing system (server) 2, a plurality of information communication terminal devices (clients) 3 and an IP (Internet Protocol) communication network 4.

The content data processing system 2, which is classified as a server computer, is constructed of a WWW (World Wide Web) server (which will hereinafter simply referred to as a Web server) 5, a database 6, and a CGI (Common Gateway Interface) module 7.

Each information communication terminal device 3 can be actualized by a single unit or a composite body of a computer terminal such as a personal computer incorporating a WWW (Web) browser, and a mobile terminal such as a cellular phone having a content transmitting/receiving function.

The IP communication network 4, which may be defined as the Internet in this example, enables various items of information to be transmitted and received between the information communication terminal device 3 serving as a client and the content data processing system 2 serving as a server.

Content data (page) in an HTML (Hypertext Markup Protocol) document format, an XML (Extensible Markup Language) document format or an SGML (Standard Generalized Markup Language) document format, which are transmitted based on a predetermined protocol such as HTTP (Hypertext Transfer Protocol) from the content data processing system 2, are forwarded to the respective terminal devices 3 via this IP communication network 4. The HTML document formatted content data will be exemplified in this embodiment.

Note that what is required of the IP communication network 4 may be a capability of IP-based forwarding of the variety of information in the form of packets, and a backbone network of any category may be used.

The database 6 in the content data processing system 2 includes a variety of databases such as an applicant database 61, a maintenance shop database 62 etc of which structures will hereinafter be explained in depth. Further, the CGI module 7 is categorized as a program for controlling an interface between the Web server 5 and the database 6 (strictly speaking, a control program of the database 6).

In this embodiment, the CGI module 7 includes yourpageCGI 71, usedcarCGI 72, shakenCGI 73 and garageCGI 74 as interface programs. The CGI module 7, after executing registration or a searching process with respect to the database 6, sends information, which is to be transmitted back to the information communication terminal device 3, in the HTML document format back to the Web server 5.

To describe it in greater details, the Web server 5 of the content data processing system 2 includes the following architecture configured by content data processing functions. Namely, the Web server 5 includes a notice control module 51 for controlling a notice of prize information, an application accept module 52 for receiving applicant information on attributes of applicants and accepting applications for the prize information, a registration control module 53 for registering, as applicant information, the attributes of the applicants who applied for the prize information, a first content data creating module 54 for creating content data corresponding to the attribute of the applicant in the applicant information, and a transmitting module 55 for transmitting the content data to the corresponding applicant.

Herein, when the applicant information contains an attribute that represents a relation between a commercial article in a predetermined category and the applicant, the web server 5 further includes a commercial article information acquiring module 56 for acquiring article information on the commercial article in the predetermined category. The first content data creating module 54 creates content data based on the article information acquired.

Further, the Web server 5 further includes a second content data creating module 57 for creating another item of content data corresponding to the applicant information, and the content data contain pieces of information for accessing other items of content data.

### [Function of Online Information Providing System]

Next, a content data processing method in the online-information providing system 1 taking the architecture described above, will be explained referring to FIG. 1 and the related drawings in combination.

The content data processing system (which might hereinafter be simply referred to as the system) 2 creates the prize information in the HTML document format, and stores the same information in a predetermined directory of the Web server 5. The HTML document containing the prize information can be browsed by specifying URL (Uniform Resource Locator) in the information communication terminal device (which might hereinafter be simply termed the terminal device) 3 connected to the IP communication network 4.

Further, images representing contents of the prizes are given unique names and thus stored in a predetermined directory of the Web server 5. This image is referred to in the HTML document from a link site, i.e., the terminal device 3, and the image is displayed as an advertisement banner in the link site. The hyperlink is set so that when the applicant selects this image visually displayed (visual display) in the link site by executing mouse clicking or a cursor operation, this HTML document (a content of the prize information, or a prize page) is displayed. The notice control module 51 of the Web server 5 controls a notice of this item of prize information.

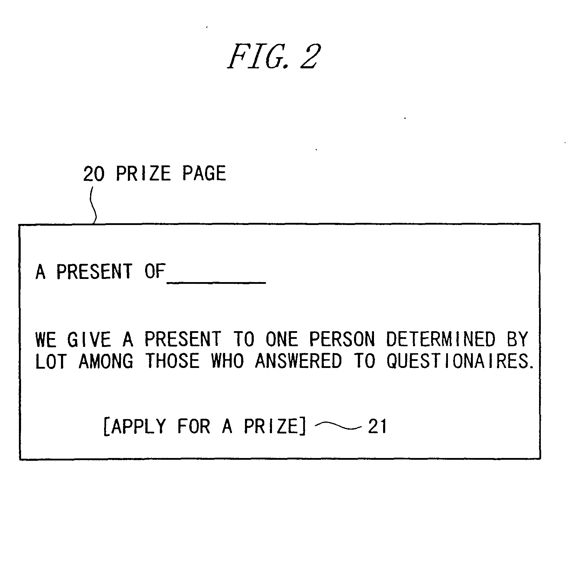

FIG. 2 shows one example of a prize page 20 displayed on the display screen (strictly speaking, a browser window) of the terminal device 3. When the user (applicant) who saw the content of this prize page 20 selects an [apply-for-prize] button 21 by clicking or pinpointing it with the cursor, prize application control information is transmitted via the communication network 4 to the Web server 5.

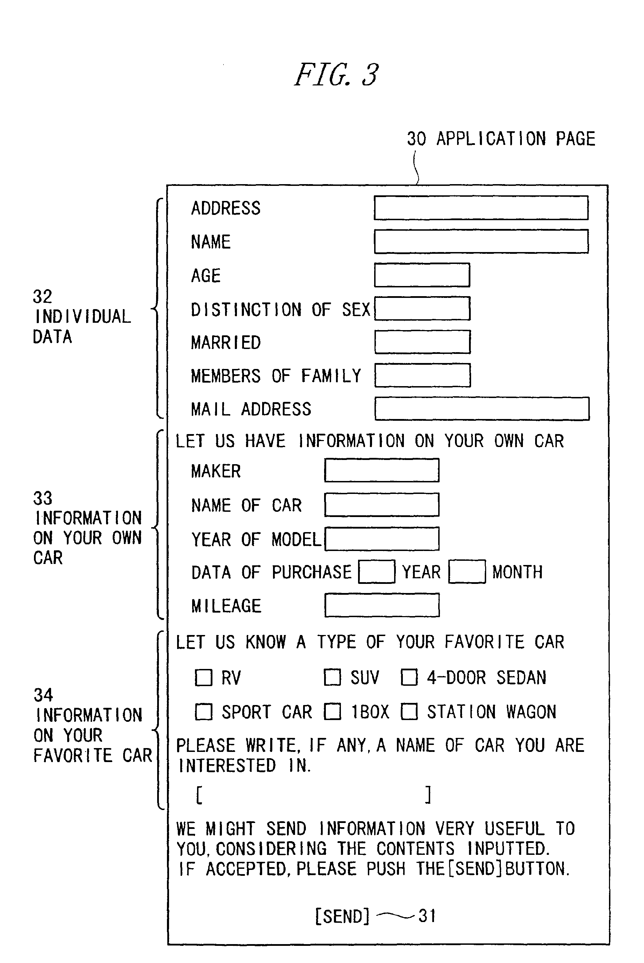

The Web server 5 receiving the prize application control information transmits to the terminal device 3 an application page 30 (see FIG. 3) for having the applicant information inputted via the communication network 4. The application page 30 is thereby displayed on the screen of the terminal device 3.

Note that a variety of selecting operations in the terminal device 3 are attained by the mouse clicking o the cursor operation, and hence, excluding a case of requiring a special explanation, this kind of operation is simply referred to as [selecting] in the following discussion. Further, a description of the communication network 4 through which the content data processing system 2 and the terminal device 3 transmit and receive various items of information, is omitted except for the case where a special explanation is needed.

When the applicant entries the applicant information in predetermined columns in accordance with display contents on the application page 30 and selects a [send] button 31, the applicant information is transmitted from the terminal device 3 to the Web server 5 by an HTML document form transmission function. FIG. 3 shows one example, wherein the application page 30 contains individual data 32, owner car information 33 and favorite car information 34 as attributes of the applicant.

The Web server 5 (the application accept module 52 and the registration control module 53) adds a registration management number to the application information received, and registers the same information in the applicant database 61 of the database 6 via the CGI module 7. After executing this registration process, the Web server 5 (the commercial article information acquiring module 56) acquires car related information from an information side related to the cars. This information site may be other content data processing system (server) 2 connected to the communication network 4.

The following four methods may be used for the Web server 5 to obtain the car related information. A method (1) is that the article information acquiring module 56 receives the car related information sent to a predetermined mail address from the information site. Amethod (2) is that the information site stores a data file in a predetermined location (an external storage unit) of the Web server 5. According to a method (3), the article information acquiring module 56 periodically navigates round the predetermined information sites and thus acquires the car related information. Finally, a method (4) is that manually obtained car related information is registered in the Web server 5 by inputting the information through a keyboard etc. These methods may be appropriately adopted.

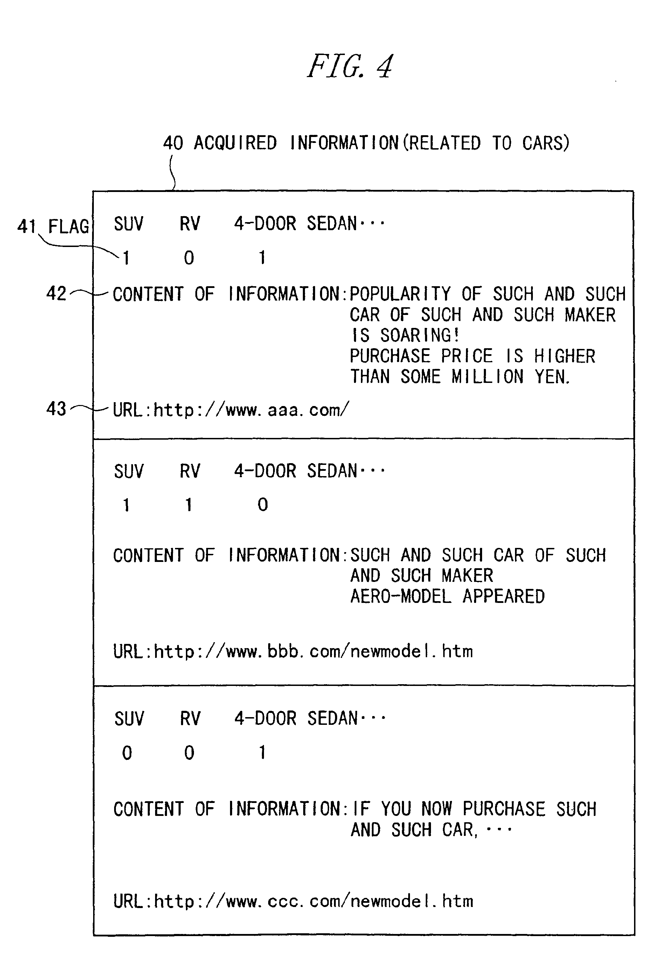

FIG. 4 shows one example of car related information (acquired information) 40 acquired by the Web server 5. This item of car related information 40 contains a flag 41 for indicating a car type (SUV, RV, 4-door sedan etc), information content (a popularity of such and such car of such and such maker is soaring ! A purchase price is higher than some million yen.) 42, and URL (http://www.aaa.com/) 43. Note that the car related information 40 may be in fact defined as data arrayed in a table format.

The Web server 5 (the first content data creating module 54, the transmitting module 55), based on the acquired car related information 40, creates an E-mail document to be delivered (transmitted) to the applicant. Delivery target applicants are extracted from the applicant database 61 on the basis of coincidence conditions. The Web server 5 (the first content data creating module 54) inserts the concerned data as content data in the acquired car related information 40 into the E-mail document in accordance with the favorite car information 34 of each applicant.

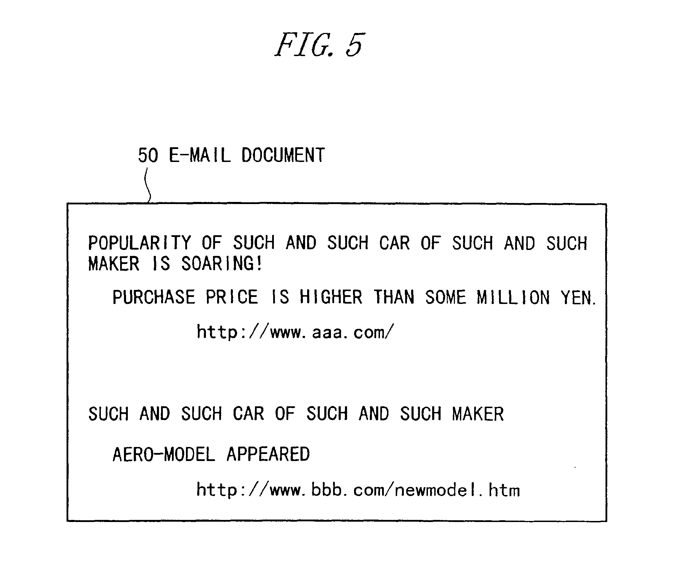

For example, on the application page 30, an E-mail document 50 containing the information contents and URLs shown in FIG. 5 is created for the applicant who puts a check mark on [RV] or [SUV] in the check box within the favorite car information 34.

The example given above is a case where the E-mail document is created for the individual applicant, however, methods that follow may also be used. That is, a method (1) is that there is created the E-mail document corresponding to a combination of respective favorite flags (the check marks put on the car types in the favorite car information 34 of the applicant information). According to a method (2), a transmitting destination file is created for every combination of the favorite flags. A method (3) is that an E-mail address of the applicant is additionally registered in the corresponding transmitting destination file in accordance with the combination of the favorite flags of the applicants. Further, a method (4) is that the E-mail document is multicast to all the E-mail addresses written in the corresponding transmitting destination file.

Those are examples each based on the attributes of every favorite car type in the favorite car information 34, however, pieces of individual data 32 such as an address, an age, a distinction of sex and members of family in the applicant information, may also be utilized.

The Web server 5 further provides the information corresponding to the individual applicant. The Web server 5 inputs identification data of the applicant, and creates an HTML document corresponding to the individual data 32 of the applicant, the owner car information 33 and the favorite car information 34.

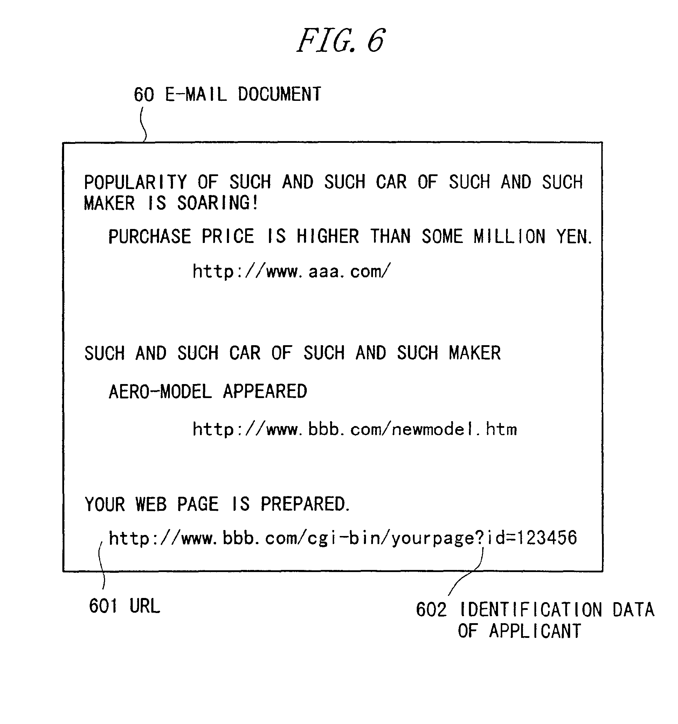

For instance, the Web server 5 embeds URL 601 for enabling the applicant to browse, into the E-mail document 50 shown in FIG. 5. FIG. 6 shows one example of an E-mail document 60 containing URL 601. URL 601 is [http://www.bbb.com/cgi-bin/yourpage?id=123456] contained in the E-mail document 60. In URL 601, [id=123456] is identification data 602 of the applicant.

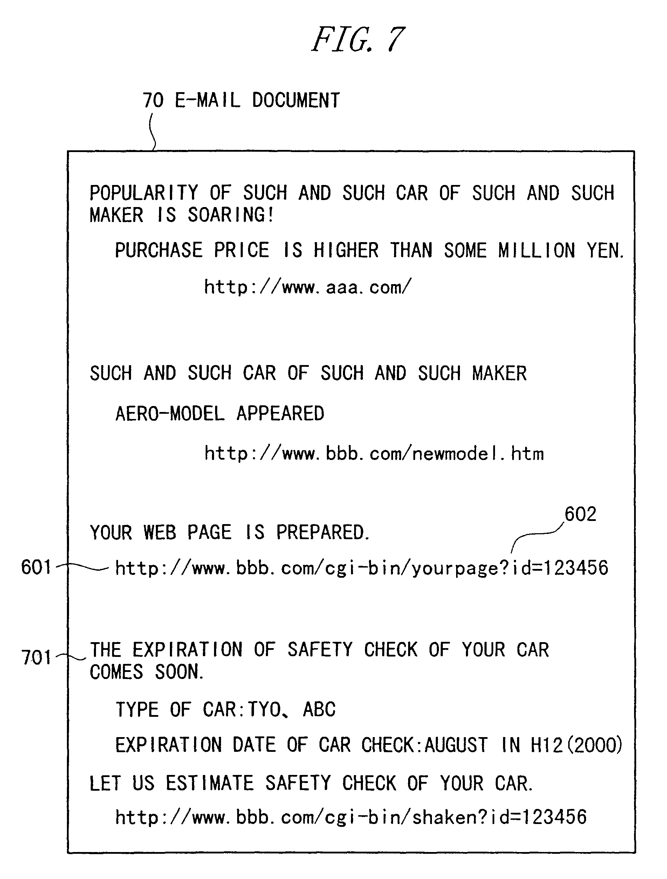

Further, the Web server 5 (the second content data creating module 57), based on the owner car information 33 of the applicant, creates car maintenance information 701, and inserts the information 701 into the E-mail document 60. FIG. 7 shows one example of an E-mail document 70 containing the car maintenance information 701. In this E-mail document 70, the car maintenance information 701 is that [the expiration of safety check of your car comes soon. Type of car: TYO, ABC, Expiration date of car check: August in H12 (2000). Let us estimate safety check of your car. http://www.bbb.com/cgi-bin/yourpage?id=123456].

When the applicant of the terminal device 3 receiving the E-mail selects URL 601 on the display screen, the Web browser starts and accesses URL 601.

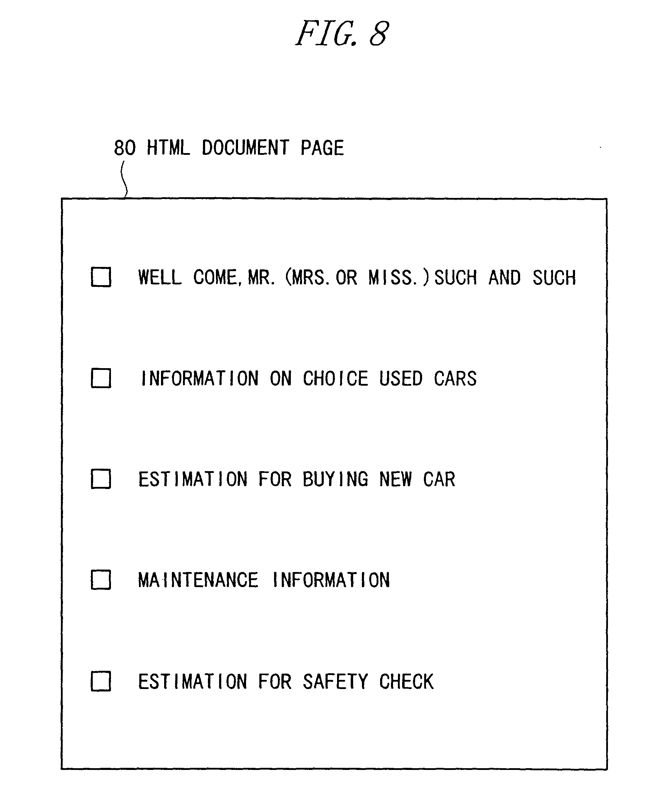

The interface program yourpageCGI 71 of the CGI module 7 recognizes that the applicant identification data 602 is [id=123456], and searches the applicant database 61. Then, the interface program yourpageCGI 71 creates an HTML document formatted page 80 as shown in FIG. 8, and sends the page 80 back to the terminal device 3 from the Web server 5. This page 80 contains the content data such as information of choice used cars, an estimation for buying a new car, maintenance information and an estimation for safety check.

The contents in this Web site are so controlled as to be browsed after specifying the identification data [id=123456] of all the applicants. For attaining this, Cookie may be used, and a CGI parameter may also be given to each hyperlink.

The choice used car information is hype-linked to URL [http://www.bbb.com/cgi-bin/usedcar?id=123456], and, when this URL is selected, the interface program (usedcarCGI) 72 of the CGI module 7 is booted.

The interface program (usedcarCGI) 72 recognizes that a registration management number (identification data of the applicant) of the person who browses is [id=123456] . Then, the Web server 5 cooperates with the interface program (usedcarCGI) 72 to dynamically create an HTML document formatted page in the following procedures, and sends this page back to the terminal device 3.

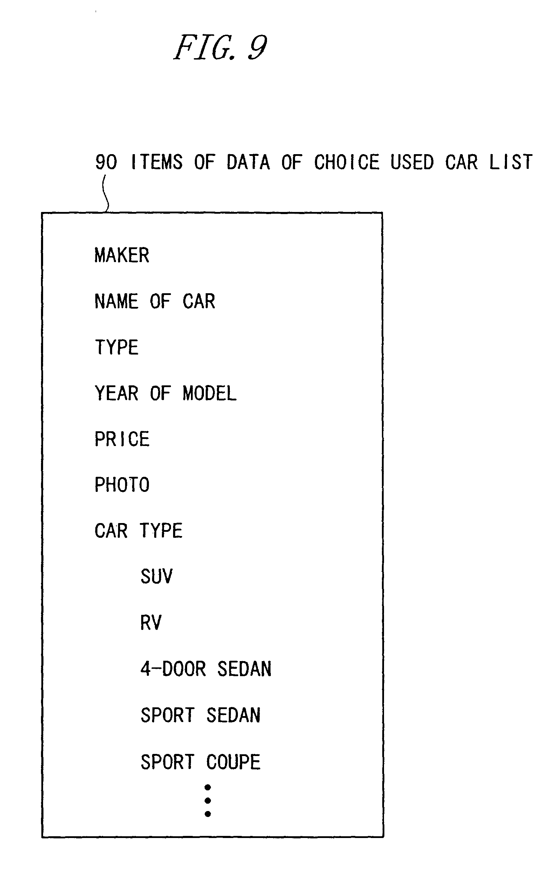

More specifically, the Web server 5 reads a record corresponding to the registration management number [123456] in the applicant database 61 of the database 6 with the aid of the interface program (usedcarCGI) 72. Next, the Web server 5 obtains [favorite car type] in which the favorite flag is set ON (1). Further, the Web server 5 extracts car data corresponding to the flag out of a data filed 90 in a choice car list shown in FIG. 9. The data field 90 in this choice car list includes a maker, a name of car, a type, a year of model, a price, a photo (image) and a car type.

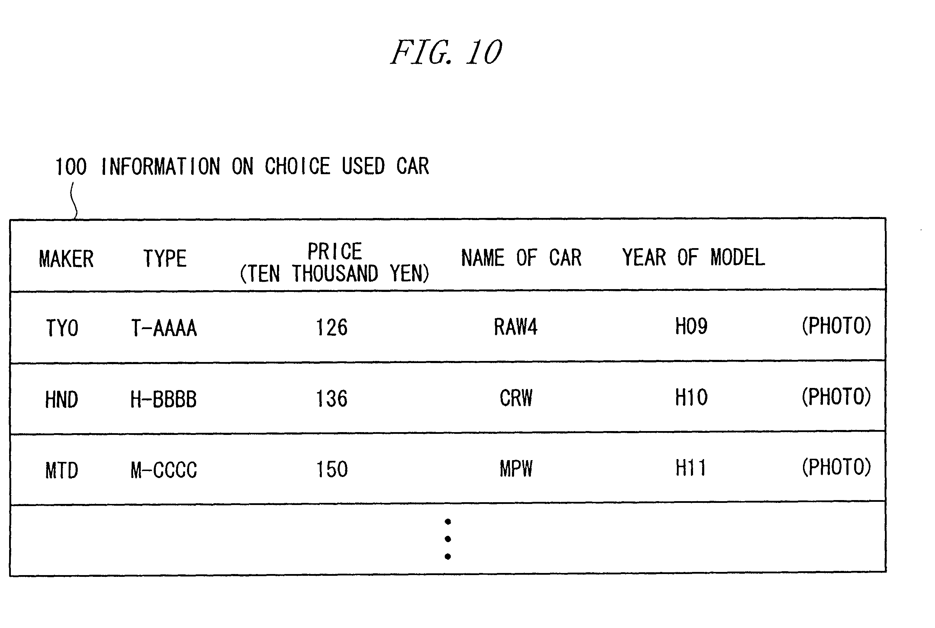

The Web server 5, based on the car data extracted with the aid of the interface program (usedcarCGI) 72, creates an HTML document for displaying a list of the choice used car information. FIG. 10 shows an example of displaying the list of choice used car information 100. The choice used car information 100 contains a maker, a type, a price, a name of car, a year of model and photo.

Further, [Estimation for safety check] is hyper-linked to URL [http://www.bbb.com/cgi-bin/shaken?id=123456]. When this URL is selected, the interface program (shakenCGI) 73 of the CGI module 7 is booted.

The interface program (shakenCGI) 73 recognizes that a registration management number of the person who browses is [123456]. Then, the Web server 5 cooperates with the interface program (shakenCGI) 73 to dynamically create an HTML document formatted page in the following procedures, and sends this page back to the terminal device 3.

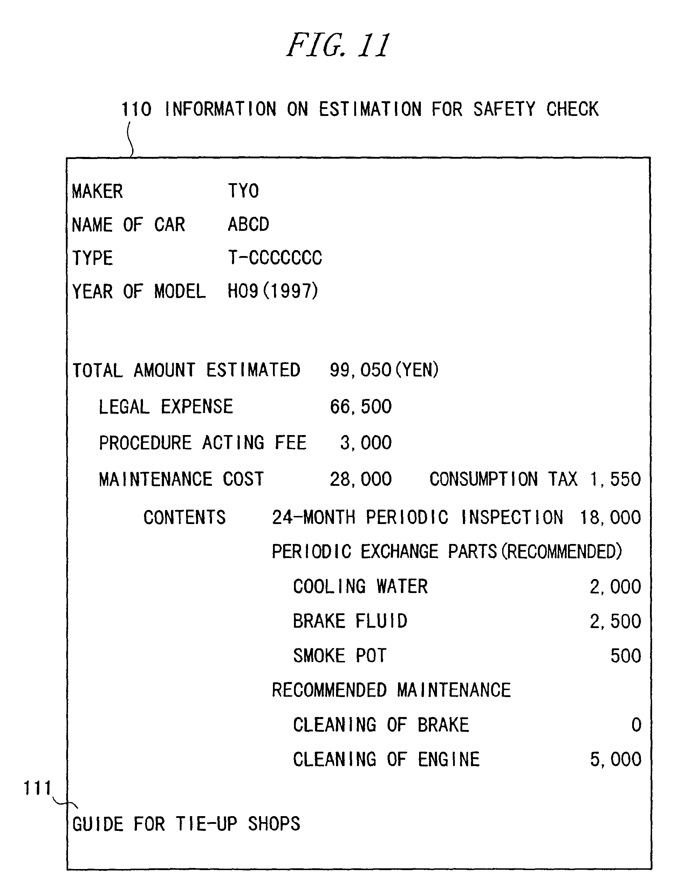

To be more specific, the Web server 5 reads a record corresponding to the registration management number [123456] in the applicant database 61 of the database 6 with the aid of the interface program (shakenCGI) 73. Next, the Web server 5 obtains the owner car information 33 of the applicant. The Web server 5, based on the owner car information 33, calculates legal expenses. Further the Web server 5 calculates a maintenance fee on the basis of the owner car information 33. FIG. 11 shows an example of displaying safety check estimation information 110. The safety check estimation information includes pieces data such as a maker, a name of car, a type, a year of model and a total sum of estimation.

When the applicant selects a link 111 of link shop guide contained in the safety check estimation information 110, the interface program (garageCGI) 74 of the CGI module 7, which corresponds to URL [http://www.bbb.com/cgi-bin/garage?id=123456], is booted.

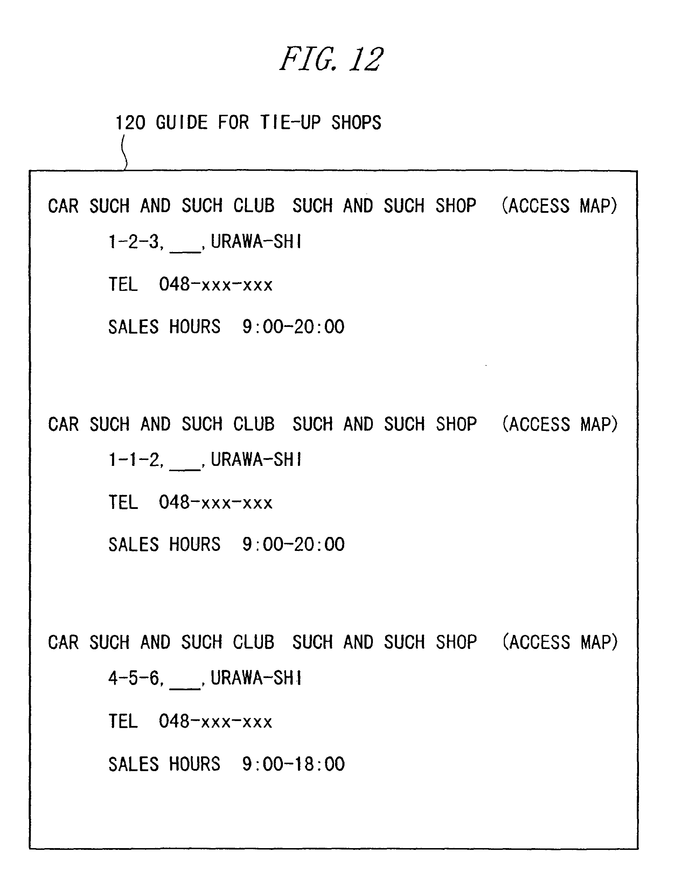

The interface program (garageCGI) 74 reads a record of the registration management number [123456] in the applicant database 61. The interface program (garageCGI) 74 obtains a district from the address data of the applicant. Then, the interface program (garageCGI) 74 extracts the maintenance shops (the link shops) in this district from the maintenance shop database 62. Further, the Web server 5 creates a list of the extracted link shops on the HTML document page, and sends this list back to the terminal device 3. FIG. 12 shows a display example of a link shop guide 120.

### [Modified Example]

The content data processes in the embodiment discussed above may be actualized by way of a program executable by a computer, and this program may be recorded on a recording medium such as a CD-ROM, a floppy disk, etc, and may also be delivered via communication lines.

In this case, the readable-by-computer recording medium recorded with this program according to the present invention comprises a step of controlling the notice of the prize information, a step of registering, as content data, the attributes of the applicants who applied for the prize information, a step of creating the content data corresponding to the applicant attributes in the applicant information, and a step of sending the content data to the applicants.

Further, the readable-by-computer recording medium recorded with this program may further comprise a step of receiving the applicant information on the attributes of the applicants, and accepting the applications for the prize information.

Moreover, the readable-by-computer recording medium recorded with the program may further comprise a step of obtaining commercial article information on commercial articles in a predetermined category, and a step of creating the content data on the basis of the article information obtained.

The readable-by-computer recording medium recorded with the program may further comprise a step of creating other set of content data corresponding to the applicant information, and the content data contain a piece of information for accessing other set of content data.

Although only a few embodiments of the present invention have been described in detail above, those skilled in the art will readily appreciate that many modifications are possible in the preferred embodiments without departing from the novel teachings and advantages of this invention. Accordingly, all such modifications are intended to be included within the scope of the present invention as defined by the following claims. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A content data processing system comprising:
a notice control module for controlling a notice of prize information;
a registration control module for registering, as applicant information, attributes of applicants who applied for the prize information;
a content data creating module for creating content data in accordance with the attributes of the applicants in the applicant information; and
a transmitting module for transmitting the content data to the corresponding applicant.

2. A content data processing system according to claim 1, further comprising an application accept module for receiving the applicant information on the attributes of the applicants, and accepting the applications for the prize information.

3. A content data processing system according to claim 1, further comprising an applicant information storage module for storing the applicant information.

4. A content data processing system according to claim 1, wherein the applicant information contains an attribute for representing a relation between a commercial article in a predetermined category and the applicant.

5. A content data processing system according to claim 4, further comprising an article information acquiring module for acquiring article information on the commercial article in the predetermined category,
wherein said content data creating module creates the content data on the basis of the article information acquired.

6. A content data processing system according to claim 1, further comprising a content data creating module for creating other set of content data corresponding to the applicant information,
wherein the content data contain a piece of information for accessing other set of content data.

7. A content data processing method comprising:
a step of controlling a notice of prize information;
a step of registering, as applicant information, attributes of applicants who applied for the prize information;
a step of creating content data in accordance with the attributes of the applicants in the applicant information; and
a step of transmitting the content data to the corresponding applicant.

8. A content data processing method according to claim 7, further comprising a step of receiving the applicant information on the attributes of the applicants, and accepting the applications for the prize information.

9. A content data processing method according to claim 7, wherein the applicant information contains an attribute for representing a relation between a commercial article in a predetermined category and the applicant.

10. A content data processing method according to claim 9, further comprising:
a step of acquiring article information on the commercial article in the predetermined category; and
a step of creating the content data on the basis of the article information acquired.

11. A content data processing method according to claim 7, further comprising a step of creating other set of content data corresponding to the applicant information,
wherein the content data contain a piece of information for accessing other set of content data.
